# EUROPEAN PATENT SPECIFICATION

(11) **EP 3 500 928 B1**
(45) Date of publication and mention of the grant of the patent: **22.05.2024**
(21) Application number: 18735890.8
(22) Date of filing: 04.01.2018
(51) Int. Cl.: G06F 9/445, G06F 9/44, H04M 1/725, G06F 3/0488

(54) **METHODS AND SYSTEMS FOR MANAGING APPLICATION INSTALLATION**
VERFAHREN UND SYSTEME ZUR VERWALTUNG EINER ANWENDUNGSINSTALLATION
PROCÉDÉS ET SYSTÈMES DE GESTION D'INSTALLATION D'APPLICATION

(30) Priority: 05.01.2017 IN 201741000547
(43) Date of publication of application: 26.06.2019
(73) Proprietor: Samsung Electronics Co., Ltd., Suwon-si, Gyeonggi-do 16677 (KR)
(72) Inventor: DAS, Kaushik, Suwon-si, Gyeonggi-do 16677 (KR); SG, Naveen KUMAR, Suwon-si, Gyeonggi-do 16677 (KR); LEE, Seunghak, Suwon-si, Gyeonggi-do 16677 (KR)
(74) Representative: HGF
(86) International application number: PCT/KR2018/000175
(87) International publication number: WO 2018/128413

(56) References cited:
- EP-A1- 2 759 931
- KR-A- 20150 063 906
- US-A1- 2010 218 103
- US-A1- 2011 307 354
- US-A1- 2012 084 771
- US-A1- 2013 111 463
- US-A1- 2013 326 502
- US-A1- 2014 108 943
- US-A1- 2016 065 714

## Description

### [Technical Field]

Apparatuses and methods consistent with example embodiments relate to managing applications and more particularly related to methods and systems for managing application installation on multiple devices.

### [Background Art]

Currently, a user may use multiple devices, such as a tablet, a mobile phone, a smart phone, a wearable computing device, an Internet of things (IoT) device, and so on, for a plurality of applications. The user can share data across these devices, provided each of the devices is associated with the user. However, each of these devices may differ from each other, wherein the differences can be in terms of operation system (OS), hardware, compatibility, and so on. US 2013/111463 A1 relates to a method and apparatus for developing socially suitable applications and devices.

Document EP 2759931 A1 relates to enabling downloading and executing of software applications on various user devices in the same network.

### [Disclosure of Invention]

### [Technical Problem]

Each application available for a device can have different versions, tailored for each type of device, depending on parameters such as the OS, the available hardware, and so on. The user may not be aware of the availability of applications for each of his devices. The user has to access an application source (such as an application store, website, and so on) on each device separately to check for availability and compatibility.

### [Solution to Problem]

According to an aspect of an example embodiment, a method for managing application installation is provided, as disclosed in claim 1.

According to an aspect of an example embodiment an electronic device for managing application installation is provided, as disclosed in claim 6.

These and other aspects of the example embodiments herein will be better appreciated and understood when considered in conjunction with the following description and the accompanying drawings. It should be understood, however, that the following descriptions, while indicating example embodiments and numerous specific details thereof, are given by way of illustration and not of limitation.

### Advantageous Effects of Invention

Example embodiments may also provide a method and electronic device for identifying an application a user is currently accessing in the electronic device.

Example embodiments may also provide a method and electronic device for identifying at least one secondary electronic device associated with the user.

Example embodiments may also provide a method and electronic device for determining at least one application for the at least one identified secondary electronic device from an application provider of the application that the user is currently accessing.

Example embodiments may also provide a method and electronic device for displaying at the electronic device at least one icon representing the at least one identified secondary electronic device and number of applications available for the at least one identified secondary electronic device, on receiving a user input on an application availability indication displayed on the application.

### Brief Description of Drawings

The above and/or other aspects will become apparent and more readily appreciated from the following description of example embodiments, taken in conjunction with the accompanying drawings, in which:
FIGS. 1a-1c illustrate example scenarios of managing applications installations in a primary electronic device, according to an example embodiment;
FIG. 2 is a block diagram illustrating various units of an electronic device, according to an example embodiment;
FIG. 3 is a flow diagram illustrating a method of managing applications installations, according to an example embodiment;
FIGS. 4a-4c illustrate example scenarios of installing applications associated with a gaming application of a primary electronic device to one or more secondary electronic device, according to an example embodiment;
FIGS. 5a-5c illustrate example scenarios of installing applications associated with a social networking site (SNS) present on a primary electronic device to one or more secondary electronic devices, according to an example embodiment;
FIG. 6 illustrates example an architecture of a smart application system for managing applications installations, according to an example embodiment; and
FIG. 7 illustrate an example scenario of an application development for a smart car, according to an example embodiment.
Fig. 8 is a block diagram illustrating an electronic device in a network environment, according to an example embodiment.

### Mode for the Invention

The example embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the example embodiments herein. The examples used herein are intended merely to facilitate an understanding of ways in which the embodiments herein may be practiced and to further enable those of skill in the art to practice the embodiments herein. Accordingly, the example embodiments should not be construed as limiting the scope of the disclosure herein.

The term "accessing an application" as used herein may refer to the user accessing an application, viewing an application, using a service provided by an application, visiting a website, viewing an application on an application store, and/or any other equivalent action.

The example embodiments herein provide methods for managing application installation. A method may include identifying an application a user is currently accessing in a primary electronic device, wherein the application is associated with an application provider/content provider (CP). Further, the method may include identifying at least one secondary electronic device associated with the primary electronic device. Further, the method may include displaying an application availability indication on the application that the user is currently accessing, on determining at least one application for the at least one identified secondary electronic device is available, wherein the at least one application is associated with the application provider of the application that the user is currently accessing. Further, the method may include displaying at the primary electronic device at least one icon representing the at least one identified secondary electronic device and number of applications available for the at least one identified secondary electronic device, on receiving a user input on an application availability indication displayed on the application.

Further, the method may include displaying the at least one application associated with the at least one identified secondary electronic device, on receiving a user gesture on the at least one icon representing the at least one identified secondary electronic device and number of applications available for the at least one identified secondary electronic device. Further, the method may include initiating an installation of the at least one application associated with the at least one identified secondary electronic device to the at least one identified secondary electronic device, on selecting the at least one application associated with the at least one identified secondary electronic device.

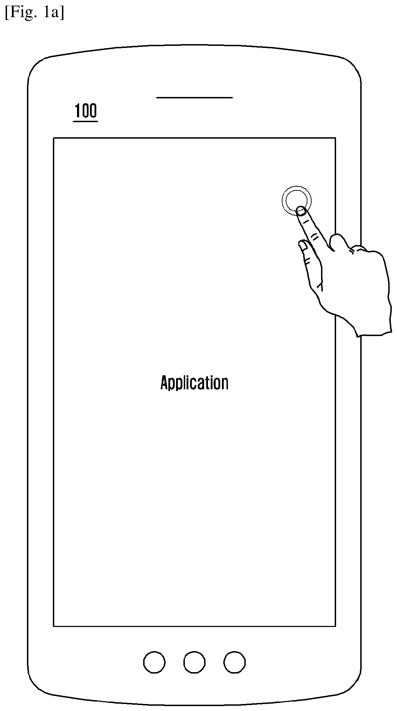

Referring now to the drawings, and more particularly to FIGS. 1a through 7, where similar reference characters denote corresponding features consistently throughout the figures, there are shown example embodiments.

FIGS. 1a-1c illustrate example scenarios of managing applications installations in an electronic device 100 (i.e., primary electronic device), according to an example embodiment. The electronic device 100 may be, for example, a mobile phone, a smart phone, tablet, a phablet, a personal digital assistant (PDA), a wearable computing device, an IoT device, or the like.

The electronic device 100 may be a primary electronic device 100. The primary electronic device 100 may be used to initiate the application installation to the one or more electronic device (i.e., one or more secondary electronic devices) connected to the primary electronic device 100.

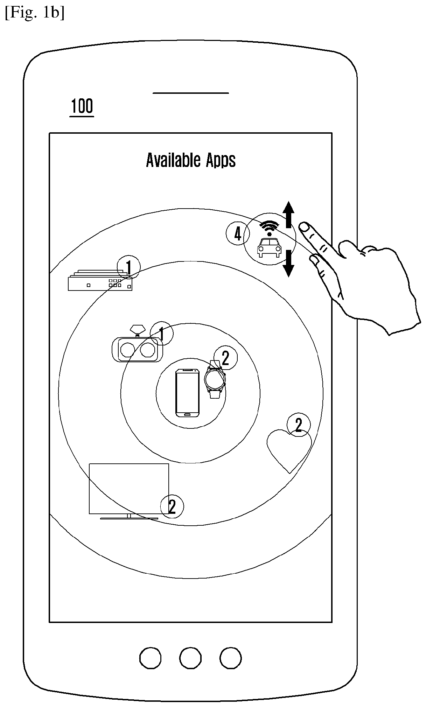

When a user is currently accessing/browsing an application/website using the primary electronic device 100. The primary electronic device 100 may identify one or more secondary electronic devices connected to the primary electronic device 100. The primary electronic device 100 may identify one or more secondary electronic devices connected to the primary electronic device 100 using a suitable means such as a wired communication, a wireless communication, a short range communication, or the like. In an example, the secondary electronic device may be a smart watch, a smart car, a smart TV, a smart set-top box, a smart gear, or any other electronic device associated with the user. Further, the primary electronic device 100 may identify applications for the connected secondary electronic device from the same application provider that the user is currently accessing the application in the primary electronic device 100. Further, the primary electronic device 100 may display an application availability indication on the application/website the user is currently accessing as shown in FIG. 1a. The application availability indication indicates to the user that there are applications available for the connected secondary electronic devices. When the user selects the application availability indicator, the primary electronic device 100 may display one or more graphical elements (e.g., icons) as part of a graphical user interface (GUI). The graphical elements may represent the at least one identified secondary electronic device and the number (e.g., count) of applications available for the at least one identified secondary electronic device as shown in FIG. 1b.

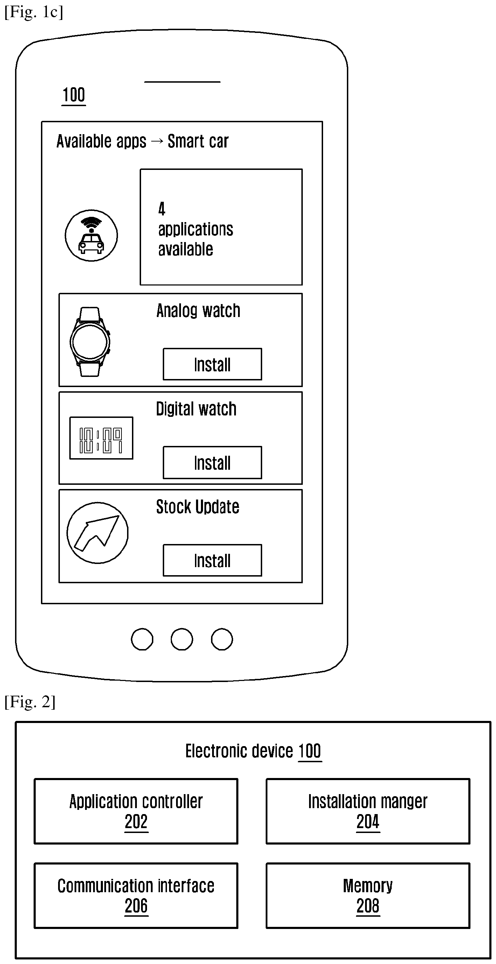

For example, a car icon displayed in the primary electronic device 100 may represent that there are four applications available for the secondary electronic device (e.g., the smart car) from the application provider of the application that the user is currently accessing. Similarly, there are other applications available for other secondary electronic devices from the application provider of the application that the user is currently accessing are shown in FIG. 1b. Further, the primary electronic device 100 may receive a user gesture on the car icon in order to display the available application for the smart car as shown in FIG. 1b. Further, the primary electronic device 100 may display the available applications associated with the smart car as shown in FIG. 1c. Further, the primary electronic device 100 may receive the user input on the application that the user is interested in to initiate the installation of the application to the corresponding secondary electronic device (e.g., the smart car).

FIG. 2 is a block diagram illustrating various units of the electronic device 100, according to an example embodiment. The electronic device 100 may an application controller 202, an installation manager 204, a communication interface 206, and a memory 208. Each of these components illustrated in FIG. 2 and other figures may be implemented with hardware (e.g., circuits, microchips, processors, etc.), software, or a combination of both.

The application controller 202 may identify an application a user is currently accessing in the primary electronic device 100; wherein the application the user is currently accessing is associated with an application provider. Further, the application controller 202 may identify one or more secondary electronic device associated with the primary electronic device 100.

Further, the application controller 202 may display an application availability indication on the application/website that the user is currently accessing, on determining one or more application for the one or more secondary electronic device is available, wherein the one or more application is associated with the application provider of the application that the user is currently accessing. Displaying the application availability indication on the application/website that the user is currently accessing on the primary electronic device 100 may be in the form of an animation. Further, the application controller 202 may display at the primary electronic device 100 one or more icons representing the at least one identified secondary electronic device and the number of applications available for the at least one identified secondary electronic device, on receiving a user input on an application availability indication displayed on the application. Displaying the one or more icons representing the one or more application associated with the one or more secondary electronic device may be in the form of an indicative map. Further, the application controller unit 202 may display the at least one application associated with the at least one secondary electronic device, on receiving a user gesture on the at least one icon representing the at least one application associated with the at least one secondary electronic device.

The installation manager 204 may initiate the installation of the at least one application associated with the at least one secondary electronic device at the at least one secondary electronic device, in response to the user selecting the at least one application associated with the at least one secondary electronic device.

The communication interface 206 may establish communication between the primary electronic device 100 and the one or more secondary electronic devices. The memory 208 may store the association information of the one or more application to the available one or secondary electronic devices. The memory 208 may be a tangible and/ or non-transitory computer-readable storage device for carrying or having computer-executable instructions or data structures stored thereon. Such tangible computer-readable storage device may be any available media that can be accessed by a general-purpose or special-purpose computer, including the functional design of any special purpose processor as described above. By way of example, and not limitation, such tangible computer-readable storage devices may include random access memory (RAM), read-only memory (ROM), electronically erasable programmable ROM (EEPROM), compact disc ROM (CD-ROM), drives or other optical disk storage, magnetic disk storage or other magnetic storage devices, semiconductor-based storage devices, or any other device or medium which can be used to carry or store desired program code means in the form of computer-executable instructions, data structures, or processor chip design.

FIG. 2 shows example components of the electronic device 100, but it is to be understood that example embodiments are not limited thereon. In other example embodiments, the electronic device 100 may include fewer or more number of components, units, modules, etc. Further, the labels or names of the units are used only for illustrative purpose and does not limit the scope of the present disclosure. One or more units can be combined together to perform same or substantially similar function in the electronic device 100.

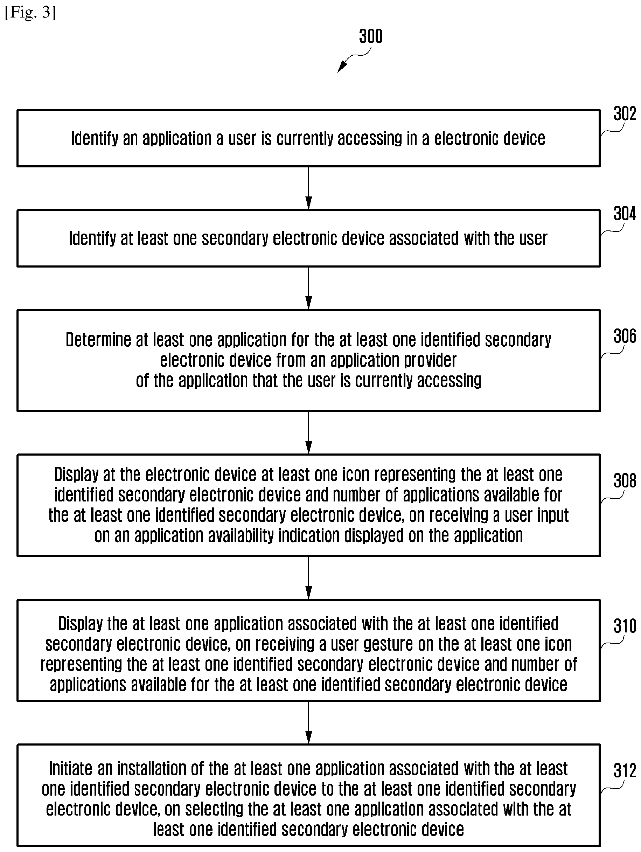

FIG. 3 is a flow diagram 300 illustrating a method for managing application installation, according to an example embodiment.

At step 302, the method may include identifying the application the user is currently accessing in the primary electronic device 100. The method may allow the application controller 202 to identify the application the user is currently accessing in the primary electronic device 100. The application the user is currently accessing may be associated with an application provider.

At step 304, the method may include identifying at least one secondary electronic device associated with the user. The method may allow the application controller unit 202 to identify at least one secondary electronic device associated with the user.

At step 306, the method may include determining at least one application for the at least one identified secondary electronic device from an application provider of the application that the user is currently accessing. The method may allow the application controller 202 to determine at least one application for the at least one identified secondary electronic device from an application provider of the application that the user is currently accessing.

At step 308, the method may include displaying at the electronic device at least one icon representing the at least one identified secondary electronic device and the number of applications available for the at least one identified secondary electronic device, in response to receiving a user input on an application availability indication displayed on the application. The method may allow the application controller 202 to display at the electronic device at least one icon representing the at least one identified secondary electronic device and the number of applications available for the at least one identified secondary electronic device, in response to receiving a user input on an application availability indication displayed on the application.

At step 310, the method may include displaying the at least one application associated with the at least one identified secondary electronic device, in response to receiving a user gesture on the at least one icon representing the at least one identified secondary electronic device and number of applications available for the at least one identified secondary electronic device. The method may allow the application controller 202 to display the at least one application associated with the at least one identified secondary electronic device, in response to receiving a user gesture on the at least one icon representing the at least one identified secondary electronic device and the number of applications available for the at least one identified secondary electronic device.

At step 312, the method may include initiating an installation of the at least one application associated with the at least one identified secondary electronic device to the at least one identified secondary electronic device, in response to the user selecting the at least one application associated with the at least one identified secondary electronic device. The method may allow the installation manger 204 to initiate an installation of the at least one application associated with the at least one identified secondary electronic device at the at least one identified secondary electronic device, in response to the user selecting the at least one application associated with the at least one identified secondary electronic device.

The various actions, acts, blocks, steps, or the like in the method and the flow diagram 300 may be performed in the order presented, in a different order or simultaneously. Further, in some example embodiments, some of the actions, acts, blocks, steps, or the like may be omitted, added, modified, skipped, or the like without departing from the scope of the present disclosure.

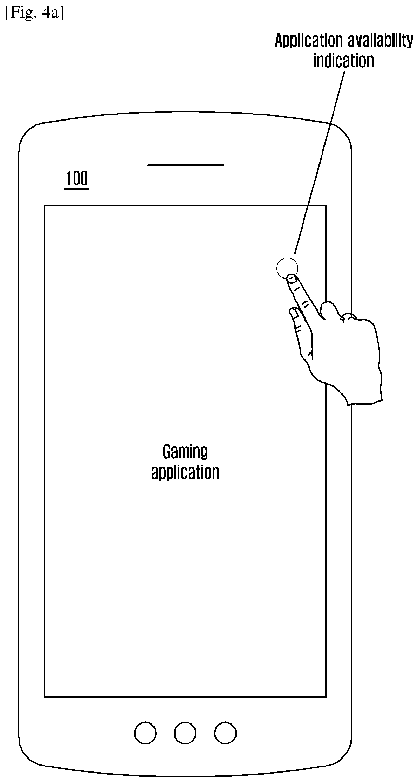

FIGS. 4a-4c illustrate example scenarios of installing applications associated with the gaming application of the primary electronic device 100 to one or more secondary electronic device, according to an example embodiment.

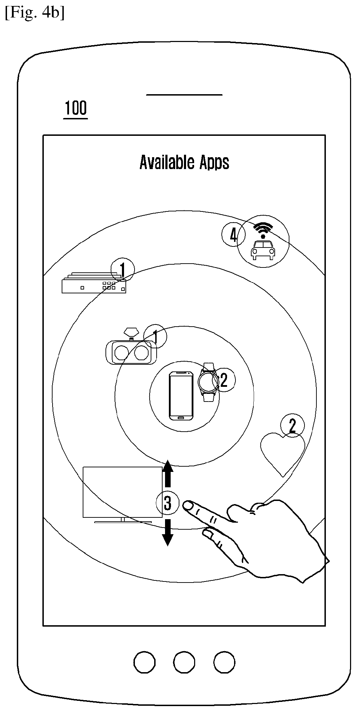

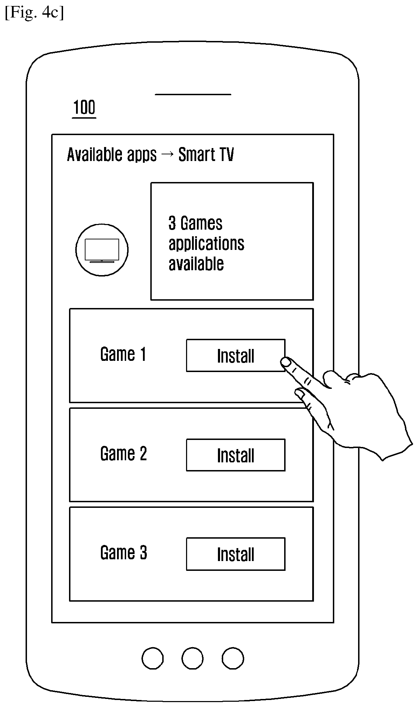

When a user is accessing the gaming application in the primary electronic device 100, the primary electronic device 100 may identify one or more secondary electronic devices associated with the primary electronic device 100. Further, the primary electronic device 100 may determine one or more applications from the application provider of the gaming application for the one or more available secondary electronic device connected to the primary electronic device 100. Further, the primary electronic device 100 may display the application availability indication on the gaming application that the user is currently accessing as shown in FIG. 4a. Further, the primary electronic device 100 may receive a user input on the application availability indication and display one or more icons representing the one or more application associated with the one or more secondary electronic device. The applications associated with the secondary electronic devices may be displayed in the form of an indicative map. The application provider of the gaming application may provide, for example, two applications for a smart watch, one application for a set-top box, and one application for a virtual reality (VR) headset, four applications for a smart car, three applications for a smart TV, and two applications for a smart health monitoring device, as shown in FIG. 4b. Further, the primary electronic device 100 may receive a user gesture on one of the icons (e.g., a smart TV icon) representing one or more applications associated with the secondary electronic devices (e.g., a smart TV). Further, the primary electronic device 100 may display the one or more applications associated with the secondary electronic device (e.g., a smart TV) as shown in FIG. 4c. Further, the primary electronic device 100 may allow the user to select the one or more applications associated with the selected secondary electronic device (e.g., a smart TV) to initiate the installation of the selected application associated with the smart TV. Further, the primary electronic device 100 may initiate the installation of the selected application on to the smart TV.

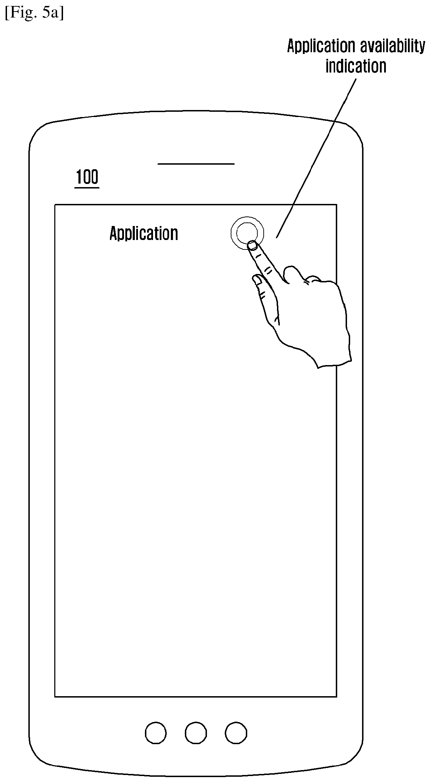

FIGS. 5a-5c illustrate example scenario of installing applications associated with the social networking site (SNS) present on the primary electronic device 100 to one or more secondary electronic devices, according to an example embodiment.

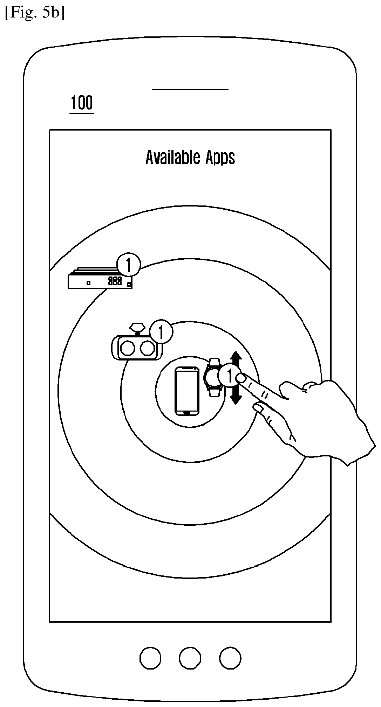

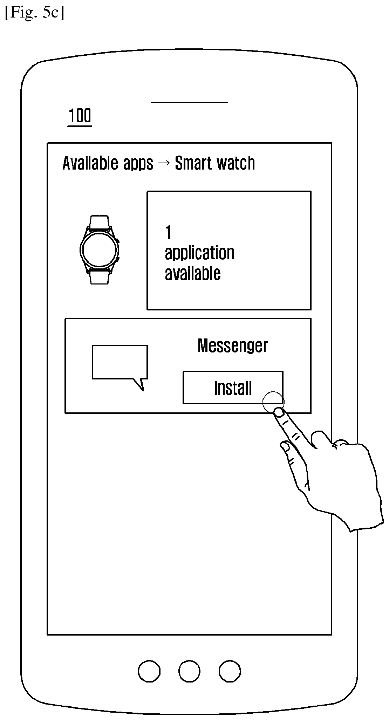

When a user is accessing the SNS application or SNS web page in the primary electronic device 100, the primary electronic device 100 may identify one or more secondary electronic devices associated with the primary electronic device 100. Further, the primary electronic device 100 may determine one or more applications from the application provider of the SNS application/SNS webpage for the one or more available secondary electronic device connected to the primary electronic device 100. Further, the primary electronic device 100 may display the application availability indication on the SNS application/SNS webpage that the user is currently accessing as shown in FIG. 5a. Further, the primary electronic device 100 may receive a user input on the application availability indication and display at the primary electronic device 100 one or more icons representing the one or more applications associated with one or more secondary electronic device, as shown in FIG. 5b. Here, the application provider of the SNS application may provide one application for the smart watch, one application for the set-top box, and one application for the VR headset. Further, the primary electronic device 100 may receive a user gesture on one of the icons (e.g., the smart watch) representing one or more applications associated with the smart watch and display the available applications associated with the smart watch as shown in FIG. 5c. Further, the primary electronic device 100 may allow a user to select an available application (e.g., a messenger application) to initiate the installation of the application to the smart watch.

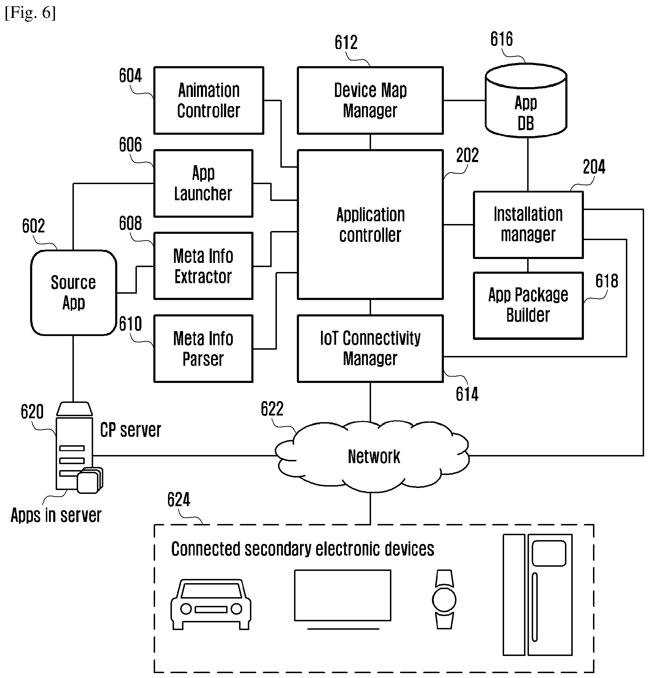

FIG. 6 illustrates an example architecture of a smart application system for managing applications installations, according to an example embodiment.

The smart application system may include a source application 602, an animation controller 604, an application launcher 606, a meta info extractor 608, a meta info parser 610, a device map manager 612, an application controller 202, an IoT connectivity manager 614, an application database (DB) 616, an installation manager 204, an application package builder 618, a content provider (CP) server 620, a network 622, and one or more connected secondary electronic devices 624.

The content provider (CP), an application developer, or an application provider may provide a source application 602 and publish information about other applications that can be installed on various connected secondary electronic devices 624. The other applications can be downloaded from the CP server 620. The process to create the applications for other secondary electronic devices 624 and publishing the applications may be facilitated by employing a developer server (DS) hosted for developers. The DS may host a set of templates for creating the applications for other secondary electronic device 624. An application developer may use those templates to develop app by downloading those templates from the DS. In a particular scenario, creating an application using a template may just require modification of the template resources. After development, the application developer may either upload the full application or only the modified resources to a server and indicate the availability of these applications using meta data information embedded inside another app (i.e., the source application), which is installed on the user's primary electronic device 100.

The application controller 202 running in the user's primary electronic device 100 may interact with the application launcher 606 to launch the source application 602. The meta info extractor 608 may extract meta information from the source application 602. The meta information available may indicate availability of other apps for the secondary electronic devices 624 (e.g., other applications whose variants may be installed on the primary electronic device). Using the meta info parser 610, the meta information may be parsed to obtain the list of available applications from the application developer and the list of secondary electronic devices 624. The application controller 202 may interact with the IoT connectivity manager 614 and filter the list of available applications that can be installed for the user's secondary electronic devices 624.

Further, the application DB 616 may segregate the applications that user might have already installed. If a list of one or more applications is found to be available for installation, the application controller 202 may inform the application launcher 606 to show an indicative animation using the animation controller 604. The animation may be displayed on the source application execution window to attract the user's attention about the availability of applications published by the application developer. If the user clicks on the animation, the animation controller 604 may inform the application controller 202, which in turn invokes the device map manager 612 to take the user to a window showing an indicative map of available apps for different connected secondary electronic devices 624. The map may show the number of applications available for a particular secondary electronic device, the status of the secondary electronic device, and other related information. Once the user expands the particular secondary electronic device, the details of the applications available for the secondary electronic device may be shown to the user. This information may also contain the applications that user has already installed, means to uninstall an already installed application, comments for different applications, means to install a new application, or the like. If the user selects to install a particular application, the device map manager 612 may inform the same to the application controller 202. The application controller 202 may propagate the installation request to the installation manager 204. The installation manager 204 may initiate the installation process by downloading the required application resources from the CP server 620 over the Network 622. Further, the installation manager 204 may optionally build the application package if, for example, the app was built using a template or may also validate the integrity of the application to be installed. Then, the installation manger 204 may transmit an installation request message to the IoT connectivity manager 614 to install the selected application on the user's secondary electronic device. Further, the IoT connectivity manager 614 may transmit (e.g., push) the installation request to the targeted connected secondary electronic device 624. If the connected secondary electronic devices 624 are online, the installation manager 204 may continue to install the application to the desired secondary electronic device. If the target secondary electronic devices are offline, the IoT connectivity manager 614 may queue the installation request such that the installation may continue when the secondary electronic device 624 becomes online. After completing the process of application installation, the application installer in the target secondary electronic device may inform the installation status back to the installation manager 204 through the IoT connectivity manager 614. The application controller 202 may also receive the same information from the installation manger 204 and inform the user accordingly with a visual indication.

Similar to the application installation, the present disclosure provides an option to uninstall the applications, update the already installed applications, read detailed information including ratings and feedback from other users, give ratings and feedback for an application, or the like.

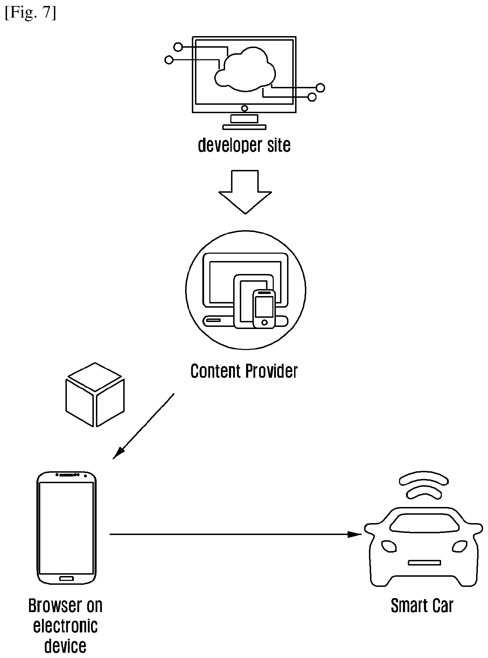

FIG. 7 illustrate an example scenario of an application development for a smart car, according to an example embodiment.

The smart car application templates may be uploaded to a developer website. The content provider may be allowed to download at least one template from the developer website. In a particular scenario, creating the smart car application using a template may just require modification of the template resources. After development of the smart car application, the developer may either upload the full application or only the modified resources to a server and indicate the availability of the smart car application using meta data information embedded inside another application (e.g., the application/ website that the user is currently accessing, such as the source application). Further, when a user is accessing a browser, the browser may prompt the user to install the smart car applications. In response to the user selecting the smart car application, the browser may send the smart car application to the car for installation. The browser may generate the smart car application and send a request to the car for installation by embedding the generated application as part of the request payload or embedding a link to the generated application inside the installation request. Further, the application may be installed on the smart car by an application runtime present in the smart car.

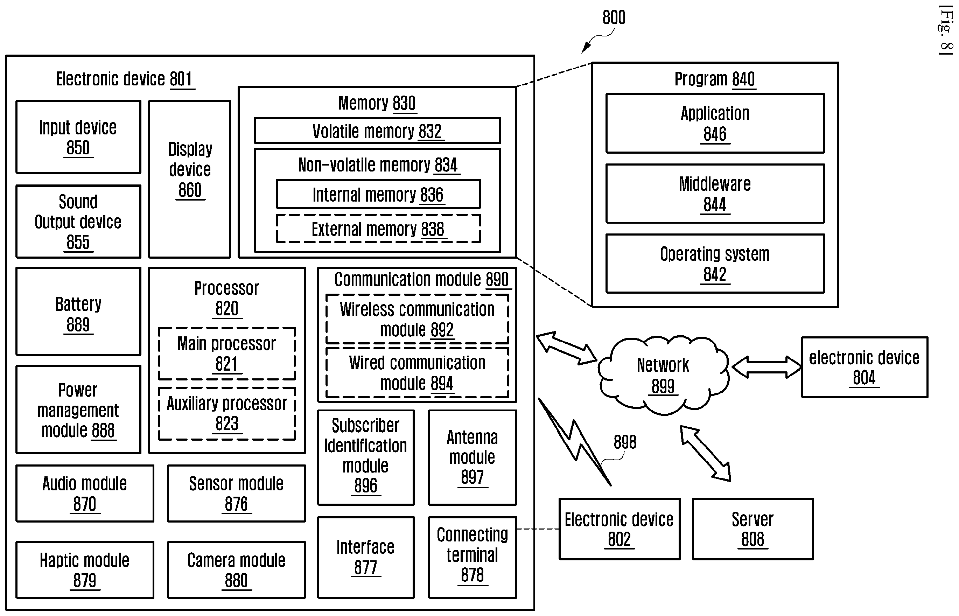

Fig. 8 is a block diagram illustrating an electronic device 801 in a network environment 800 according to various embodiments. Referring to Fig. 8, the electronic device 801 in the network environment 800 may communicate with an electronic device 802 via a first network 898 (e.g., a short-range wireless communication network), or an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input device 850, a sound output device 855, a display device 860, an audio module 870, a sensor module 876, an interface 877, a haptic module 879, a camera module 880, a power management module 888, a battery 889, a communication module 890, a subscriber identification module (SIM) 896, or an antenna module 897. In some embodiments, at least one (e.g., the display device 860 or the camera module 880) of the components may be omitted from the electronic device 801, or one or more other components may be added in the electronic device 801. In some embodiments, some of the components may be implemented as single integrated circuitry. For example, the sensor module 876 (e.g., a fingerprint sensor, an iris sensor, or an illuminance sensor) may be implemented as embedded in the display device 860 (e.g., a display).

The processor 820may execute, for example, software (e.g., a program 840) to control at least one other component (e.g., a hardware or software component) of the electronic device 801 coupled with the processor 820, and may perform various data processing or computation. According to one embodiment, as at least part of the data processing or computation, the processor 820 may load a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thererto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by other component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. According to an embodiment, the display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. According to an embodiment, the audio module 870 may obtain the sound via the input device 850, or output the sound via the sound output device 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, a HDMI connector, a USB connector, a SD card connector, or an audio connector (e.g., a headphone connector),

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to one embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as BluetoothTM, wireless-fidelity (Wi-Fi) direct, or infrared data association (IrDA)) or the second network 899 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. According to an embodiment, the antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 and 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," ""coupled to," "connected with," or "connected to? another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program #40) including one or more instructions that are stored in a storage medium (e.g., internal memory #36 or external memory #38) that is readable by a machine (e.g., the electronic device #01) . For example, a processor (e.g., the processor #20) of the machine (e.g., the electronic device #01) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The example embodiments disclosed herein may be implemented through at least one software program running on at least one hardware device and performing network management functions to control the network elements. The network elements shown in FIG. 2 and FIG. 8 may include blocks, which may be at least one of a hardware device, or a combination of hardware device and a software module. Though the terms "first," "second," "primary," "secondary," etc. may be used herein to describe various devices, applications, members, components, regions, layers, and/or sections, these devices, applications, members, components, regions, layers, and/or sections should not be limited by these terms. These terms are only used to distinguish one device, application, member, component, region, layer, or section from another region, layer, or section, and not used to imply order, preference, or priority.

The foregoing description of the example embodiments will so fully reveal the general nature of the present disclosure herein that others can, by applying current knowledge, readily modify and/or adapt for various applications such example embodiments without departing from the generic concept, and, therefore, such adaptations and modifications should and are intended to be comprehended within the scope of the appended claims.

It is to be understood that the phraseology or terminology employed herein is for the purpose of description and not of limitation.

## Claims

1. A method (300) for managing application installation, the method comprising:
identifying a first application that a user is currently accessing in a primary electronic device (302) and obtaining provider information regarding an application provider of the first application based on the identified first application;
identifying at least one secondary electronic device associated with the user (304);
determining at least one second application available for the at least one secondary electronic device from the application provider of the first application (306);
displaying an application availability indication for the determined at least one second application on the first application;
receiving a user input on the application availability indication; and
displaying, at the primary electronic device (100), at least one graphical element representing the at least one secondary electronic device and the at least one second application available for the at least one secondary electronic device, in response to the receiving of the user input (308).

2. The method (300) of claim 1, further comprising:
displaying the at least one second application associated with the at least one secondary electronic device, in response to receiving a user gesture on the at least one graphical element (310); and
initiating an installation of the at least one second application at the at least one secondary electronic device, in response to the at least one second application being selected (312).

3. The method (300) of claim 1, wherein the application availability indication is displayed on the first application, in response to determining that the at least one second application for the at least one secondary electronic device is available.

4. The method (300) of claim 1, the method further comprising:
in response to receiving a user gesture for selecting one of the at least one graphical element, displaying a visual element representing a selected secondary electronic device corresponding to the selected graphical element, information of the number of applications available for the selected secondary electronic device, and at least one item representing each of at least one application available for the selected secondary electronic device.

5. The method (300) of claim 4, the method further comprising:
in response to receiving the user gesture for selecting one of the at least one item, initiating an installation of an application corresponding to the selected item at the selected secondary electronic device.

6. An electronic device (100) for managing application installation, the electronic device comprising: an application controller (202) configured to:
identify a first application that a user is currently accessing in a primary electronic device (302) and obtain provider information regarding an application provider of the first application based on the identified first application;
identify at least one secondary electronic device associated with the user (304);
determine at least one second application available for the at least one secondary electronic device from an application provider of the first application (306);
display an application availability indication for the determined at least one second application on the first application;
receive a user input on the application availability indication; and
display, at the electronic device, at least one graphical element representing the at least one secondary electronic device and the at least one second application available for the at least one secondary electronic device, in response to the receiving of the user input (308).

7. The electronic device (100) of claim 6, wherein the application controller is further configured to:
display the at least one second application associated with the at least one secondary electronic device, in response to receiving a user gesture on the at least one graphical element, and
initiate an installation of the at least one second application at the at least one secondary electronic device, in response to the at least one second application being selected.

8. The electronic device (100) of claim 6, wherein the application availability indication is displayed on the first application, in response to determining that the at least one second application for the at least one secondary electronic device is available.

9. The electronic device (100) of claim 6, wherein the application controller (202) is further configured to:
in response to receiving a user gesture for selecting one of the at least one graphical element, display, on a screen of the electronic device, a visual element representing a selected secondary electronic device corresponding to the selected graphical element, information of the number of applications available for the selected secondary electronic device, and at least one item representing each of at least one application available for the selected secondary electronic device.

10. The electronic device (100) of claim 6, wherein the application controller is further configured to:
in response to receiving a user gesture for selecting one of the at least one item, initiate an installation of an application corresponding to the selected item at the selected secondary electronic device (312).

11. The electronic device (100) of claim 6, wherein the at least one secondary electronic device includes at least one of a watch, a vehicle, a television, a set top box, a wearable device, and an Internet of things(IoT) device.

## Patentansprüche

1. Verfahren (300) zum Verwalten einer Anwendungsinstallation, wobei das Verfahren Folgendes umfasst:
Identifizieren einer ersten Anwendung, auf die ein Benutzer aktuell in einer primären elektronischen Vorrichtung (302) zugreift, und Erhalten von Anbieterinformationen bezüglich eines Anwendungsanbieters der ersten Anwendung basierend auf der identifizierten ersten Anwendung;
Identifizieren mindestens einer sekundären elektronischen Vorrichtung, die dem Benutzer (304) zugeordnet ist;
Bestimmen mindestens einer zweiten Anwendung, die für die mindestens eine sekundäre elektronische Vorrichtung von dem Anwendungsanbieter der ersten Anwendung (306) verfügbar ist;
Anzeigen einer Anwendungsverfügbarkeitsangabe für die bestimmte mindestens eine zweite Anwendung in der ersten Anwendung;
Empfangen einer Benutzereingabe zu der Anwendungsverfügbarkeitsangabe; und
Anzeigen, an der primären elektronischen Vorrichtung (100), mindestens eines grafischen Elements, das die mindestens eine sekundäre elektronische Vorrichtung und die mindestens eine zweite Anwendung darstellt, die für die mindestens eine sekundäre elektronische Vorrichtung verfügbar ist, als Reaktion auf das Empfangen der Benutzereingabe (308).

2. Verfahren (300) nach Anspruch 1, ferner umfassend:
Anzeigen der mindestens einen zweiten Anwendung, die der mindestens einen sekundären elektronischen Vorrichtung zugeordnet ist, als Reaktion auf ein Empfangen einer Benutzergeste auf dem mindestens einen grafischen Element (310); und
Initiieren einer Installation der mindestens einen zweiten Anwendung auf der mindestens einen sekundären elektronischen Vorrichtung als Reaktion darauf, dass die mindestens eine zweite Anwendung (312) ausgewählt wird.

3. Verfahren (300) nach Anspruch 1, wobei die Anwendungsverfügbarkeitsangabe in der ersten Anwendung als Reaktion auf ein Bestimmen, dass die mindestens eine zweite Anwendung für die mindestens eine sekundäre elektronische Vorrichtung verfügbar ist, angezeigt wird.

4. Verfahren (300) nach Anspruch 1, wobei das Verfahren ferner Folgendes umfasst:
als Reaktion auf ein Empfangen einer Benutzergeste zum Auswählen eines von dem mindestens einen grafischen Element Anzeigen eines visuellen Elements, das eine ausgewählte sekundäre elektronische Vorrichtung, die dem ausgewählten grafischen Element entspricht, Informationen über die Anzahl von Anwendungen, die für die ausgewählte sekundäre elektronische Vorrichtung verfügbar sind, und mindestens ein Objekt darstellt, das jede von mindestens einer Anwendung darstellt, die für die ausgewählte sekundäre elektronische Vorrichtung verfügbar ist.

5. Verfahren (300) nach Anspruch 4, wobei das Verfahren ferner Folgendes umfasst:
als Reaktion auf ein Empfangen der Benutzergeste zum Auswählen eines des mindestens einen Objekts Initiieren einer Installation einer Anwendung, die dem ausgewählten Objekt entspricht, auf der ausgewählten sekundären elektronischen Vorrichtung.

6. Elektronische Vorrichtung (100) zum Verwalten einer Anwendungsinstallation, wobei die elektronische Vorrichtung Folgendes umfasst:
eine Anwendungssteuerung (202), die zu Folgendem konfiguriert ist:
Identifizieren einer ersten Anwendung, auf die ein Benutzer aktuell in einer primären elektronischen Vorrichtung (302) zugreift, und Erhalten von Anbieterinformationen bezüglich eines Anwendungsanbieters der ersten Anwendung basierend auf der identifizierten ersten Anwendung;
Identifizieren mindestens einer sekundären elektronischen Vorrichtung, die dem Benutzer (304) zugeordnet ist;
Bestimmen mindestens einer zweiten Anwendung, die für die mindestens eine sekundäre elektronische Vorrichtung von einem Anwendungsanbieter der ersten Anwendung (306) verfügbar ist;
Anzeigen einer Anwendungsverfügbarkeitsangabe für die bestimmte mindestens eine zweite Anwendung in der ersten Anwendung;
Empfangen einer Benutzereingabe auf der Anwendungsverfügbarkeitsangabe; und
Anzeigen, an der elektronischen Vorrichtung, mindestens eines grafischen Elements, das die mindestens eine sekundäre elektronische Vorrichtung und die mindestens eine zweite Anwendung darstellt, die für die mindestens eine sekundäre elektronische Vorrichtung verfügbar ist, als Reaktion auf das Empfangen der Benutzereingabe (308).

7. Elektronische Vorrichtung (100) nach Anspruch 6, wobei die Anwendungssteuerung ferner zu Folgendem konfiguriert ist:
Anzeigen der mindestens einen zweiten Anwendung, die der mindestens einen sekundären elektronischen Vorrichtung zugeordnet ist, als Reaktion auf ein Empfangen einer Benutzergeste auf dem mindestens einen grafischen Element, und
Initiieren einer Installation der mindestens einen zweiten Anwendung auf der mindestens einen sekundären elektronischen Vorrichtung als Reaktion darauf, dass die mindestens eine zweite Anwendung ausgewählt wird.

8. Elektronische Vorrichtung (100) nach Anspruch 6, wobei die Anwendungsverfügbarkeitsangabe in der ersten Anwendung als Reaktion auf ein Bestimmen, dass die mindestens eine zweite Anwendung für die mindestens eine sekundäre elektronische Vorrichtung verfügbar ist, angezeigt wird.

9. Elektronische Vorrichtung (100) nach Anspruch 6, wobei die Anwendungssteuerung (202) ferner zu Folgendem konfiguriert ist:
als Reaktion auf ein Empfangen einer Benutzergeste zum Auswählen eines von dem mindestens einen grafischen Element Anzeigen, auf einem Bildschirm der elektronischen Vorrichtung, eines visuellen Elements, das eine ausgewählte sekundäre elektronische Vorrichtung, die dem ausgewählten grafischen Element entspricht, Informationen über die Anzahl von Anwendungen, die für die ausgewählte sekundäre elektronische Vorrichtung verfügbar sind, und mindestens ein Objekt darstellt, das jede mindestens einer Anwendung darstellt, die für die ausgewählte sekundäre elektronische Vorrichtung verfügbar ist.

10. Elektronische Vorrichtung (100) nach Anspruch 6, wobei die Anwendungssteuerung ferner zu Folgendem konfiguriert ist:
als Reaktion auf ein Empfangen einer Benutzergeste zum Auswählen eines des mindestens einen Objekts Initiieren einer Installation einer Anwendung, die dem ausgewählten Objekt entspricht, auf der ausgewählten sekundären elektronischen Vorrichtung (312).

11. Elektronische Vorrichtung (100) nach Anspruch 6, wobei die mindestens eine sekundäre elektronische Vorrichtung mindestens eines von einer Uhr, einem Fahrzeug, einem Fernseher, einer Set-Top-Box, einer am Körper tragbaren Vorrichtung und einer Internet-of-Things-Vorrichtung (IoT-Vorrichtung) enthält.

## Revendications

1. Procédé (300) permettant la gestion d'installation d'application, le procédé comprenant :
l'identification d'une première application à laquelle un utilisateur accède actuellement dans un dispositif électronique primaire (302) et l'obtention des informations de fournisseur concernant un fournisseur d'application de la première application sur la base de la première application identifiée ;
l'identification d'au moins un dispositif électronique secondaire associé à l'utilisateur (304) ;
la détermination d'au moins une seconde application disponible pour le au moins un dispositif électronique secondaire auprès du fournisseur d'applications de la première application (306) ;
l'affichage d'une indication de disponibilité d'application pour la au moins une seconde application déterminée sur la première application ;
la réception d'une entrée utilisateur sur l'indication de disponibilité d'application ; et
l'affichage, au niveau du dispositif électronique primaire (100), d'au moins un élément graphique représentant le au moins un dispositif électronique secondaire et la au moins une seconde application disponible pour le au moins un dispositif électronique secondaire, en réponse à la réception de l'entrée utilisateur (308).

2. Procédé (300) de la revendication 1, comprenant en outre :
l'affichage de la au moins une seconde application associée à l'au moins un dispositif électronique secondaire, en réponse à la réception d'un geste utilisateur sur le au moins un élément graphique (310) ; et
le lancement d'une installation de la au moins une seconde application au niveau du au moins un dispositif électronique secondaire, en réponse à la sélection de la au moins une seconde application (312).

3. Procédé (300) de la revendication 1, ladite indication de disponibilité d'application étant affichée sur la première application, en réponse à la détermination de la disponibilité de la au moins une seconde application pour le au moins un dispositif électronique secondaire.

4. Procédé (300) de la revendication 1, le procédé comprenant en outre :
en réponse à la réception d'un geste utilisateur pour sélectionner l'un du au moins un élément graphique, l'affichage d'un élément visuel représentant un dispositif électronique secondaire sélectionné correspondant à l'élément graphique sélectionné, des informations sur le nombre d'applications
disponibles pour le dispositif électronique secondaire sélectionné, et d'au moins un article représentant chacune d'au moins une application disponible pour le dispositif électronique secondaire sélectionné.

5. Procédé (300) de la revendication 4, le procédé comprenant en outre :
en réponse à la réception du geste utilisateur pour sélectionner l'un du au moins un article, le lancement d'une installation d'une application correspondant à l'article sélectionné au niveau du dispositif électronique secondaire sélectionné.

6. Dispositif électronique (100) destiné à la gestion d'un programme d'application, le dispositif électronique comprenant :
un dispositif de commande d'application (202) configuré pour :
identifier une première application à laquelle un utilisateur accède actuellement dans un dispositif électronique primaire (302) et obtenir des informations de fournisseur concernant un fournisseur d'application de la première application sur la base de la première application identifiée ;
identifier au moins un dispositif électronique secondaire associé à l'utilisateur (304) ;
déterminer au moins une seconde application disponible pour le au moins un dispositif électronique secondaire auprès d'un fournisseur d'applications de la première application (306) ;
afficher une indication de disponibilité d'application pour la au moins une seconde application déterminée sur la première application ;
recevoir une entrée utilisateur sur l'indication de disponibilité d'application ; et
afficher, au niveau du dispositif électronique, au moins un élément graphique représentant le au moins un dispositif électronique secondaire et la au moins une seconde application disponible pour le au moins un dispositif électronique secondaire, en réponse à la réception de l'entrée utilisateur (308).

7. Dispositif électronique (100) de la revendication 6, ledit dispositif de commande d'application étant en outre configuré pour :
afficher la au moins une seconde application associée à l'au moins un dispositif électronique secondaire, en réponse à la réception d'un geste utilisateur sur le au moins un élément graphique, et
lancer une installation de la au moins une seconde application au niveau du au moins un dispositif électronique secondaire, en réponse à la sélection de la au moins une seconde application.

8. Dispositif électronique (100) de la revendication 6, ladite indication de disponibilité d'application étant affichée sur la première application, en réponse à la détermination de la disponibilité de la au moins une seconde application pour le au moins un dispositif électronique secondaire.

9. Dispositif électronique (100) de la revendication 6, ledit dispositif de commande d'application (202) étant en outre configuré pour :
en réponse à la réception d'un geste utilisateur pour sélectionner l'un du au moins un élément graphique, afficher, sur un écran du dispositif électronique, un élément visuel représentant un dispositif électronique secondaire sélectionné correspondant à l'élément graphique sélectionné, des informations sur le nombre d'applications disponible pour le dispositif électronique secondaire sélectionné, et au moins un article représentant chacune d'au moins une application disponible pour le dispositif électronique secondaire sélectionné.

10. Dispositif électronique (100) de la revendication 6, ledit dispositif de commande d'application étant en outre configuré pour :
en réponse à la réception d'un geste utilisateur pour sélectionner l'un du au moins un article, lancer une installation d'une application correspondant à l'article sélectionné au niveau du dispositif électronique secondaire sélectionné (312).

11. Dispositif électronique (100) de la revendication 6, ledit au moins un dispositif électronique secondaire comprenant au moins l'un d'une montre, d'un véhicule, d'un téléviseur, d'un boîtier décodeur, d'un dispositif portable et/ou d'un dispositif de l'internet des objets (IoT).
